# EUROPÄISCHE PATENTSCHRIFT

(11) **EP 2 435 672 B1**
(45) Veröffentlichungstag und Bekanntmachung des Hinweises auf die Patenterteilung: **29.04.2020**
(21) Anmeldenummer: 10722319.0
(22) Anmeldetag: 28.05.2010
(51) Int. Cl.: F01N 3/10, F01N 3/023, F01N 3/20

(54) **ABGASNACHBEHANDLUNGSSYSTEM**
EXHAUST GAS AFTERTREATMENT SYSTEM
SYSTÈME DE TRAITEMENT DES GAZ D'ÉCHAPPEMENT

(30) Priorität: 30.05.2009 DE 102009023550
(43) Veröffentlichungstag der Anmeldung: 04.04.2012
(73) Patentinhaber: Umicore AG & Co. KG, 63457 Hanau-Wolfgang (DE); Deutz AG, 51149 Köln (DE)
(72) Erfinder: MIEBACH, Rolf, 50321 Bruehl (DE); SCHRAML, Stephan, 53639 Königswinter (DE); BROLL, Peter, 51429 Bergisch-Gladbach (DE); GEISSELMANN, Andreas, 63075 Offenbach (DE); DE BUHR, Stefan, 63454 Hanau-Mittelbuchen (DE); FRANTZ, Stéphanie, 53332 Bornheim (DE); WOERZ, Anke, 60435 Frankfurt (DE); SCHUETZE, Frank-Walter, 63739 Aschaffenburg (DE)
(74) Vertreter: Retzow, Stefan
(86) Internationale Anmeldenummer: PCT/EP2010/003260
(87) Internationale Veröffentlichungsnummer: WO 2010/139429

(56) Entgegenhaltungen:
- WO-A1-2012/084156
- DE-A1-102008 026 477
- DE-A1-102008 063 515
- US-A1- 2008 127 638
- US-A1- 2009 288 402
- US-B1- 7 032 376

## Beschreibung

Die Erfindung betrifft ein Abgasnachbehandlungssystem für eine Brennkraftmaschine. Insbesondere beinhaltet sie eine Einbringungsvorrichtung zur Einbringung von Kohlenwasserstoffen (HCs) in ein das Prozessabgas der Brennkraftmaschine führendes Abgasrohr und eine stromabwärts des Einbringungsortes von Prozessabgas durchströmte und durch Oxidation der eingebrachten Kohlenwasserstoffe die Prozessabgastemperatur erhöhende Behandlungsvorrichtung.

Ein derartiges Abgasnachbehandlungssystem ist aus der EP1537304 bekannt. Dieses Abgasnachbehandlungssystem ist zur Anbindung an Kompressionszündungsmotoren, wie Dieselmotoren, ausgelegt. Dabei beschäftigt sich der Gegenstand dieses Dokuments damit, die Gesamtemissionen eines solchen Kompressionszündungsmotors zu verringern. Dazu wird vorgeschlagen, den Kompressionszündungsmotor in verschiedenen Betriebsarten zu betreiben und eine katalytische Komponente aus einer vorgegebenen Auswahl in dem Abgassystem vorzusehen, die zumindest einen Platinkatalysator aufweist. Es ist allgemein bekannt, dass zur Erzeugung bestimmter vorgegebener katalytischer Reaktionen Platinkatalysatoren eingesetzt werden können.

Allgemein ist bekannt, übliche thermische Regenerationssysteme für Partikelfilter zum Beispiel katalytische Brenner zu nutzen. Hierbei wird meist eine flüssige HC-Dosierung in das Abgas zusammen mit einem Dieseloxidationskatalysator, der diese Kohlenwasserstoffe umsetzt und thermische Energie zur Abgastemperaturanhebung auf zirka 600° liefert, eingesetzt. Bevorzugt wird der Kraftstoff in die Abgasleitung zwischen Brennkraftmaschine und Katalysator eingespritzt. Bei PKW-Anwendungen werden die Kohlenwasserstoffe üblicherweise über eine späte, nicht mehr thermisch umgesetzte Nacheinspritzung in den Brennraum der Brennkraftmaschine bereitgestellt. All diese Systeme nutzen Katalysatoren, die in erheblichem Maße Platin beinhalten. Darüber hinaus kommt auch das wesentlich preisgünstigere Palladium zum Einsatz - vorwiegend zur thermischen Stabilisierung des Katalysators - jedoch mit einem Massenanteil von maximal zirka 50 % am Gesamtedelmetall.

Aus der EP1857648 ist zu entnehmen, dass ein so genannter "fuel processor" zur Erzeugung von Hitze im Abgasstrang eines Dieselmotors herangezogen werden kann. Dabei kann diese Behandlungsvorrichtung aus einem Oxidationskatalysator und einem Reformierungskatalysator bestehen, welche in das Abgas eingebrachten Kraftstoff ggf. zur Erwärmung einer nachgeordneten Partikelfalle nutzen kann.

Die US7032376 beschreibt ein Abgasreinigungssystem bestehend aus bestimmten katalytischen Einheiten und einem stromauf befindlichen Brenner, der eine für die katalytischen Einheiten notwendige Wärme generiert.

Aus der US2008127638 ist zu entnehmen, dass katalytische Einheiten zur Oxidation von Kohlenwasserstoffen bevorzugt aus Pt-only Katalysatoren bestehen und nur ausnahmsweise auch Palladium enthalten können.

Der vorliegenden Erfindung liegt die Aufgabe zugrunde, ein Abgasnachbehandlungssystem und ein Verfahren zum Betreiben eines derartigen Abgasnachbehandlungssystems anzugeben, welches im Stande ist, das Abgas einer Brennkraftmaschine zu erhitzen und darüber hinaus kostengünstig realisierbar ist.

Diese und weitere hier nicht näher genannte, sich jedoch aus dem Stand der Technik in nahe liegender Weise ergebende Aufgaben werden durch die Angabe eines Abgasnachbehandlungssystems für eine Brennkraftmaschine gelöst, welche eine Vorrichtung zur Einbringung von Kohlenwasserstoffen in ein das Prozessabgas der Brennkraftmaschine führendes Abgasrohr (6) beinhaltet, wobei die Kohlenwasserstoffe in der Vorrichtung zumindest teilweise verdampft sowie durch Crackreaktionen und/oder durch partielle Oxidation chemisch verändert werden und wobei die Vorrichtung zur zumindest teilweisen Verdampfung sowie zur durch Crackreaktionen und/oder durch partielle Oxidation bewirkten chemischen Veränderung der Kohlenwasserstoffe eine Anordnung ist, die einen Brenner (2) mit einer Versorgungsvorrichtung (8a, 8b) für Brennstoff und Luft, sowie eine Brennkammer (3) und eine mit einer Eindüsvorrichtung (5) für Kohlenwasserstoffe versehene Abgasleitung (4) aufweist, die an dem Einbringungsort in das Abgasrohr (6) einmündet, und eine stromabwärts des Austritts (7), vom Prozessabgas durchströmte und durch Oxidation der eingebrachten, teilweise verdampften sowie durch Crackreaktionen und/oder durch partielle Oxidation chemisch veränderten Kohlenwasserstoffe die Prozessabgastemperatur erhöhende, katalytisch beschichtete Bauteile aufweisende Behandlungsvorrichtung beinhaltet, wobei der Platinanteil zumindest in einem Teilbereich der katalytischen Beschichtung der Bauteile weniger als 50 % der Gesamtmasse aller katalytisch wirksamen Substanzen in diesem Teilbereich der Beschichtung beträgt, der Palladiumanteil der katalytischen Beschichtung des Teilbereichs mindestens 50 % der Gesamtmasse aller Edelmetalle des Teilbereichs der Behandlungsvorrichtung beträgt und wobei die katalytisch beschichteten Bauteile Katalysatorsubstrate oder Partikelfilter sind.

Dieser Ausgestaltung liegt die überraschende Erkenntnis zugrunde, dass ein Abgasnachbehandlungssystem, welches unter Einsatz einer geeigneten Einbringungsvorrichtung die Kohlenwasserstoffe bereits in einer auf besondere Art verdampften sowie durch Crackreaktionen und/oder durch partielle Oxidation chemisch veränderten Form bereitstellt, mit erheblich geringerem Platingehalt in den katalytischen Bestandteilen der nachfolgenden Behandlungsvorrichtung arbeiten kann als dies bei herkömmlichen Kohlenwasserstoffgemischen der Fall ist. Ein Ziel der Einbringung der Kohlenwasserstoffe und Konversion in der Behandlungsvorrichtung ist es dabei, die in einem Partikelfilter aus dem Prozessabgas der Brennkraftmaschine ausgefilterten Rußpartikel kontinuierlich oder diskontinuierlich zu verbrennen. Dass dies mit der erfindungsgemäßen Vorrichtung so überaus erfolgreich und trotzdem kostengünstig umgesetzt werden kann, war so nicht vorhersehbar.

Innerhalb des Abgasnachbehandlungssystems umfasst der Teilbereich der katalytischen Beschichtung der Bauteile der Behandlungsvorrichtung mindestens 20%, vorzugsweise 30%, weiter vorzugsweise 50% und besonders bevorzugt 100%, der Gesamtmasse der katalytischen Beschichtung auf den Bauteilen der die Prozessabgastemperatur erhöhenden Behandlungsvorrichtung. Unter der katalytischen Beschichtung der Bauteilen werden solche Beschichtungen verstanden, die einen Gradienten von größer +1 K/cm, bevorzugt größer +2.5 K/cm und besonders bevorzugt größer +10 K/cm entlang der Strömungsrichtung während der Phase des Aufheizens des Abgases aufweisen. Dadurch ist eine zuverlässige Funktion des Systems sichergestellt.

Im Teilbereich der katalytischen Beschichtung der Behandlungsvorrichtung befinden sich weitere katalytisch wirksame Substanzen, insbesondere kann Palladium vorhanden sein. Bevorzugt enthält die katalytische Beschichtung des Teilbereichs Edelmetalle mit einer Gesamtedelmetallmasse bezogen auf das Bauteil- bzw. Substratvolumen im Bereich von 0,1-10 g/L, bevorzugt 0,5-5 g/L und besonders bevorzugt im Bereich von 0,7-3,5 g/L.

In einer besonders vorteilhaften Ausgestaltung ist es vorgesehen und möglich, dass der Edelmetallanteil der katalytischen Beschichtung des Teilbereichs der Behandlungsvorrichtung weniger als 10%, bevorzugt weniger als 5% und besonders bevorzugt weniger als 3 % der Gesamtmasse der katalytischen Beschichtung des betrachteten Teilbereichs beträgt.

In einer Ausgestaltung enthält der Teilbereich der katalytischen Beschichtung der Behandlungsvorrichtung also weitere katalytisch wirksame Substanzen. In einer bevorzugten Ausführungsform beträgt der Anteil der Edelmetalle an der Gesamtmasse der katalytisch wirksamen Substanzen jedoch mehr als 10%, besonders bevorzugt mehr als 30% und ganz besonders bevorzugt 100%.

Palladium ist eines der im Teilbereich existierenden Edelmetalle, und der Palladiumanteil der katalytischen Beschichtung des Teilbereichs der Behandlungsvorrichtung ist mindestens 50 %, vorzugsweise mindestens 75 % und besonders bevorzugt 100% der Gesamtmasse aller Edelmetalle des Teilbereichs der Behandlungsvorrichtung betragen.

Sofern Platin im Teilbereich vorhanden ist, ist davon auszugehen, dass der Platinanteil in dem Teilbereich der katalytischen Beschichtung der Bauteile weniger als 50%, mehr bevorzugt weniger als 30% und ganz besonders bevorzugt weniger als 20% bzw. äußerst bevorzugt weniger als 10% der Gesamtmasse aller katalytisch wirksamen Substanzen in diesem Teilbereich der Beschichtung beträgt. In einer besonderen Ausführung beträgt der Platingehalt weniger als 5%, bevorzugt weniger als 3% und besonders bevorzugt weniger als 1 % der Gesamtmasse aller katalytisch wirksamen Substanzen des Teilbereichs also im Grenzfall 0 %.

Unter katalytisch wirksamen Substanzen werden im Sinne dieser Erfindung Aktivmetalle verstanden, d.h. Übergangsmetalle der Gruppen VB, VIB, VIIB, VIII, IB und IIB und insbesondere auch Edelmetalle, welche im Stande sind als Bestandteil einer katalytischen Beschichtung bei einer Aktivmetallkonzentration gewählt im Bereich von 0,1 - 500 g/L Katalysatorraum, bevorzugt 0,2 - 200 g/L und besonders bevorzugt 0,5 - 100 g/L bei einer Temperatur von 350°C ein Kohlenwasserstoffgemisch resultierend aus der Verdampfung von Dieselkraftstoff in Motorabgas mit einer Volumenkonzentration von 1000 ppm C1 zumindest überwiegend zu Kohlendioxid und Wasser zu oxidieren. Die katalytisch wirksamen Substanzen bzw. die Aktivmetalle können in elementarer Form und/oder in Form von Verbindungen, insbesondere Oxiden vorliegen.

Neben den eingangs angesprochenen katalytisch wirksamen Substanzen, bzw. Aktivmetallen kann die katalytische Beschichtung der Behandlungsvorrichtung weitere Komponenten enthalten, die beispielsweise die feine Verteilung der katalytisch wirksamen Substanzen bzw. Aktivmetalle fördern und allgemein deren Wirkmechanismus unterstützen oder gar erst ermöglichen. Zu diesen Komponenten zählen insbesondere reine oder gemischte Oxide des Aluminiums, des Siliziums, des Titans, des Zirkons oder der Seltenen Erden, wobei Beimengungen von insbesondere Alkali- bzw. Erdalkalielementen, Halogeniden und/oder Schwefel- bzw. Phosphorverbindungen deren Eigenschaften wie z.B. die Azidität weiter modifizieren können. Weitere Beimengungen sind prinzipiell möglich. Weiter finden häufig Speicherkomponenten wie z.B. Zeolithe und/oder Cer/Zirkon-Mischoxide Einsatz. ["Autoabgaskatalysatoren", Hagelüken et. al. , expert Verlag, 2. Auflage, 2005]

Die katalytisch wirksamen Substanzen sind meist auf diesen weiteren Komponenten oder selektiven Teilen davon angeordnet. Edelmetalle wie z.B. Platin oder Palladium liegen überwiegend in Form von kleinen Partikeln im Bereich von 0,1 bis 100 nm, bevorzugt 0,2-50 nm und weiter bevorzugt 0,5-25 nm Durchmesser vor.

Die katalytische Beschichtung insgesamt bildet einen hochoberflächigen und hochporösen Aufbau. Typische BET-Oberflächen liegen im Bereich von 1-300 m²/g, vorzugsweise 50-200 m²/g und besonders bevorzugt im Bereich von 80-160 m²/g; Porenvolumina liegen im Bereich von 0,1-2 g/L vorzugsweise 0,2-1,5 g/L und besonders bevorzugt im Bereich von 0,25-1 g/L.

Die katalytische Beschichtung wird im Allgemeinen in Form eines Schlickers ["Autoabgaskatalysatoren", Hagelüken et. al. , expert Verlag, 2. Auflage, 2005] auf das zu beschichtende Bauteil in einem oder mehreren Schritten aufgetragen. In Einzelfällen können auch Lösungen oder Gasphasenverfahren eingesetzt werden. Häufig werden keramische oder metallische Substrate in Form von Wabenkörpern oder anderen Strukturierungen wie z.B. Schäumen, Wellmatten oder Vliesen beschichtet, prinzipiell sind aber auch glatte Bauteile wie z.B. Rohrinnenwände beschichtbar. Bei den Substraten kann es sich um einfache Durchflusssubstrate handeln aber auch um Substrate mit Filterfunktion, in denen das zu filtrierende Medium z.B. durch eine poröse keramische Wand oder ein Metallvlies geleitet wird.

Die Funktion der katalytischen Beschichtung besteht darin, die eindosierten oxidierbaren Komponenten, insbesondere Kohlenwasserstoffe (HCs), im Zuflussgas möglichst weitgehend zu Kohlendioxid und Wasser umzusetzen und dabei Wärme zu generieren. Teile dieser Komponenten aus dem Zuflussgas können intermediär in adsorbierter oder flüssiger Form in der Beschichtung gespeichert werden, wobei besonders funktionsfähige Beschichtungen sich darin auszeichnen, dass die Funktionsfähigkeit durch solche Speichereffekte möglichst wenig beeinträchtigt wird. In der Anwendung sind besonders funktionsfähige katalytische Beschichtungen durch geringe Kohlenwasserstoffkonzentrationen am Austritt und geringe radiale Temperaturabweichungen insbesondere im Eintrittsbereich des die Temperatur erhöhenden Teilbereichs der Behandlungsvorrichtung gekennzeichnet, wobei diese Eigenschaften über das komplette Regenerationsintervall von typischerweise ca. 10 bis 20 Minuten möglichst konstant aufrecht erhalten werden.

Die katalytische Beschichtung wird vorzugsweise in einer Menge von 5-300 g/L, vorzugsweise 10-150 g/L und besonders bevorzugt im Bereich von 20-130 g/L Bauteil- bzw. Substratvolumen aufgebracht. Die Beschichtung weist vorzugsweise eine Schichtdicke im Bereich von 5 bis 200 µm, vorzugsweise 10-100 µm und besonders bevorzugt im Bereich von 20-60 µm auf. Wird Edelmetall als Aktivkomponente eingesetzt, liegt die Gesamtedelmetallmasse bezogen auf das Bauteil- bzw. Substratvolumen vorzugsweise im Bereich von 0,1-10 g/L, Unedle Aktivmetalle bzw. katalytisch wirksame Substanzen können deutlich höhere Beladungen aufweisen und im Extremfall die komplette Beschichtung ausmachen.

Insbesondere, wenn Palladium bei der katalytischen Beschichtung des Teilbereichs der Behandlungsvorrichtung zum Einsatz kommt, kann der Platinmasseanteil der katalytisch wirksamen Substanzen im Grenzfall 0 %, betragen. Dies war zum Zeitpunkt der Erfindung mitnichten zu vermuten. Häufig sind in diesen die Kohlenwasserstoffe oxidierenden Katalysatoren große Anteile an teurem Platin vorhanden.

Vorteile einer platinfreien Beschichtung sind:
- Der Preis des Palladiums ist im langjährigen Mittel deutlich geringer als der des Platins, Nichtedelmetalle sind nochmals deutlich kostengünstiger.
- Es wird ein System mit sehr geringen NO₂-Emissionen realisiert (NO₂ ist giftig und immissionsseitig limitiert, im Untertagebetrieb und in Innenräumen sind NO₂-bildende Systeme häufig nicht zulässig).
- Überraschenderweise wird trotz der bekannten Schwefelempfindlichkeit des Palladiums eine erhöhte Schwefeltoleranz im Vergleich zu platinhaltigen Beschichtungen erreicht. Palladium und unedle Aktivmetalle haben im Vergleich zu Platin eine deutlich geringere Wirkung auf die Oxidation von SO₂ zu SO₃, dementsprechend werden die wahrscheinlich für die Schwefel-Vergiftung von Katalysatoren relevanten Sulfate vermutlich in geringerer Menge gebildet.

Die Erhöhung der Abgastemperatur wird bevorzugt über einen so genannten Dieseloxidationskatalysator bewirkt. Dies bedeutet, dass der Teilbereich der katalytischen Beschichtung der Bauteile der die Prozessabgastemperatur erhöhenden Behandlungsvorrichtung einen Teil oder die Gesamtheit eines derartigen Dieseloxidationskatalysators darstellt. Die Erhöhung der Abgastemperatur kann aber in einer besonderen Ausführungsform auch oder ausschließlich über einen zu regenerierenden Filter erfolgen. Im Grenzfall wird überhaupt kein Dieseloxidationskatalysator benötigt und das Kohlenwasserstoffgemisch wird direkt auf den katalytisch beschichteten Partikelfilter, der in diesem Fall das alleinige katalytisch beschichtete Bauteil der die Prozessabgastemperatur erhöhende Behandlungsvorrichtung darstellt, geleitet. In diesem Fall ist es naturgemäß erstrebenswert, dass möglichst bald nach Eintritt in den Filter ausreichende Temperaturen zur Regeneration erreicht werden.

Die die Prozessabgastemperatur erhöhenden katalytisch beschichteten Bauteile sind Katalysatorsubstrate oder Partikelfilter, die jeweils einheitlich oder zonal unterschiedlich beschichtet sein können. Es sind auch Beschichtungslösungen mit einer oder mehreren übereinander liegenden, katalytisch aktiven Schichten denkbar. Im Rahmen der Erfindung ist es möglich, beispielsweise einen Dieseloxidationskatalysator oder einen sonstigen Katalysator, der auch andere Aufgaben übernehmen kann, mit der katalytischen Beschichtung als eigenständiges Bauteil auszugestalten und zu verbauen, oder aber den Dieseloxidationskatalysator mit der katalytischen Beschichtung letztendlich in den Partikelfilter zu integrieren. Selbstverständlich sind auch Kombinationslösungen der beiden beschriebenen Ausgestaltungen im Rahmen der Erfindung möglich und vorgesehen.

In einer Weiterbildung der Erfindung umfasst der Teilbereich der Behandlungsvorrichtung vorzugsweise ein ganzes die Prozessabgastemperatur erhöhendes katalytisch beschichtetes Bauteil oder einen Teil eines solchen Bauteils oder Teile mehrerer solcher Bauteile. Jedes Bauteil kann also mehrere Teilbereiche aufweisen, die unterschiedliche Eigenschaften haben, von denen ein Teilbereich die zuvor angegebenen Eigenschaften besitzt. Dieser Teilbereich muss nicht zwingend der erste Teil des jeweiligen Bauteils sein, sollte aber zumindest in Strömungsrichtung im vorderen Teil einer zonalen Beschichtung eines solchen Bauteils, insbesondere eines Partikelfilters angeordnet sein.

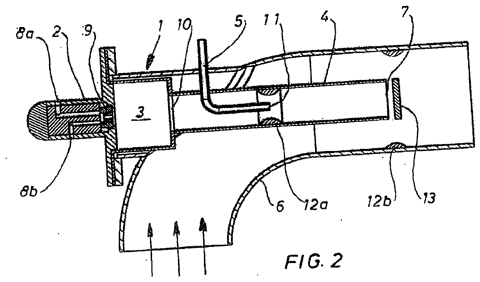

Die Einbringungsvorrichtung zur zumindest teilweisen Verdampfung sowie zur durch Crackreaktionen und/oder durch partielle Oxidation bewirkten chemischen Veränderungen der Kohlenwasserstoffe ist in einer weiteren Ausgestaltung eine Anordnung, die einen Brenner mit einer Versorgungsvorrichtung für Brennstoff und Luft sowie eine Brennkammer und eine mit einer Eindüsvorrichtung für Kohlenwasserstoffe versehene Abgasleitung aufweist, die an dem Einbringungsort in das Abgasrohr einmündet (Fig. 2). Die eingedüsten Kohlenwasserstoffe liegen in Form von flüssigem Brennstoff vor, der bevorzugt der gleiche Brennstoff, beispielsweise Dieselkraftstoff, ist, der auch mit der Versorgungsvorrichtung des Brenners eingespritzt wird. Grundsätzlich ist es aber möglich, zum Betreiben des Brenners auch einen gasförmigen Brennstoff, beispielsweise Erdgas, zu verwenden. Die getrennte Einbringung des zusätzlichen Brennstoffs über die Eindüsvorrichtung bietet den Vorteil, dass im Gegensatz zum Stand der Technik eine für einen Prozess beispielsweise benötigte Brennstoffmenge nicht mehr insgesamt durch die Versorgungsvorrichtung des Brenners zugeführt werden muss, sondern stromabwärts des Brenners eine Teilmenge des insgesamt benötigten Brennstoffs als "Sekundärbrennstoffmenge" zugeführt wird. Diese Sekundärbrennstoffmenge wird dann letztendlich ganz kontrolliert aufbereitet und/oder verbrannt. Das entsprechende Betreibungsverfahren zeichnet sich vom Grundsatz her dadurch aus, dass der Brenner eine thermische Grundleistung zur Verfügung stellt, deren Untergrenze durch die Bereitstellung einer ausreichenden Energiemenge zur Verdampfung der in die Abgasleitung eingedüsten Brennstoffmenge vorgegeben ist. Diese Ausgestaltung beziehungsweise dieses Verfahren zum Betreiben eines Abgasnachbehandlungssystems ist im Ergebnis deutlich kostengünstiger realisierbar als ein herkömmliches Abgasnachbehandlungssystem.

In Weiterbildung der Erfindung weist eine Mündung (11) der Eindüsvorrichtung (5) in der Abgasleitung (4) eine Zerstäuberdüse, insbesondere eine Druckzerstäuberdüse oder eine Luftstromzerstäuberdüse, auf. Mit der Druckzerstäuberdüse wird der flüssige Brennstoff allein durch den Druck des Brennstoffs zerstäubt. Alternativ kann die Eindüsvorrichtung aber auch als Luftstromzerstäuberdüse ausgestaltet sein. Dabei wird die Luftstromzerstäuberdüse so betrieben, dass der Brennstoff mit einer geringen Luftmenge in die Abgasleitung eingebracht wird. Bei normalem Betrieb einer Luftstromzerstäuberdüse würde beispielsweise 20 L/min Luft und 2 cm³/min Brennstoff zur Bereitstellung eines zündfähigen Brennstoff-Luft-Gemisches gefördert werden, während mit der erfindungsgemäß betriebenen Luftstromzerstäuber düse mit 20 L/min Luft bis zu 100 cm³/min. Brennstoff zerstäubt werden. Ein derartig fettes Brennstoff-Luft-Gemisch ist primär nicht zündfähig.

In weiterer Ausgestaltung ist in der Abgasleitung im Bereich einer Mündung der Eindüsvorrichtung eine Venturieinrichtung angeordnet. Diese bewirkt eine schnelle Vermischung der aufeinander treffenden Teilströme von Abgas und verdampftem Brennstoff.

In weiterer Ausgestaltung der Erfindung sind der Brenner mit der Brennkammer, die Abgasleitung und die Eindüsvorrichtung in ein Gehäuse integriert und das Gehäuse ist an das Abgasrohr adaptiert. Es wird somit eine Baueinheit bereitgestellt, die an verschiedene Abgasrohre angebaut werden kann. Dabei kann das Gehäuse im Idealfall so ausgestaltet sein, dass dieses bei Anwendung an einer Brennkraftmaschine bevorzugt brennkraftmaschinennah, beispielsweise direkt hinter der Abgassammelleitung oder einem Abgasturbolader der Brennkraftmaschine, an das Abgassystem angebaut werden kann.

In weiterer Ausgestaltung ragt die Abgasleitung mit zumindest einem Austritt in das Abgasrohr hinein. Dadurch wird eine gute Vermischung der zusammentreffenden Gasströme gewährleistet. Dazu ist die Abgasleitung bevorzugt konzentrisch in das Abgasrohr so eingeführt, dass der Austritt aus der Abgasleitung in Strömungsrichtung des Prozessabgasstroms, also beispielsweise des Brennkraftmaschinenabgasstroms, angeordnet ist. Dadurch wird eine Erhöhung der Strömungsgeschwindigkeit des Prozessabgases erreicht, was für eine schnelle Durchmischung des Gasgemischs aus Brennerabgas und verdampften Brennstoff mit dem Prozessabgas sorgt. Dadurch kann eine Entzündung des Gasgemischs auch dann verhindert werden, wenn das Prozessabgas Sauerstoff enthält. Um das Auftreten chemischer Reaktionen im Bereich der Einleitung weiter zu unterbinden, können entsprechende Hilfsmittel, die dies unterstützen, vorgesehen sein. Solche mögliche Hilfsmittel sind beispielsweise eine Platte oder ein Kegel, die vor dem Austritt der Abgasleitung angeordnet sind, wobei die Kegelspitze zu dem Austritt der Abgasleitung hin ausgerichtet ist. Auch ist es vorgesehen, zusätzlich oder alternativ zur weiteren Erhöhung der Strömungsgeschwindigkeit im Bereich des Austritts eine Strömungsverengung in dem Abgasrohr beispielsweise in Form einer Venturieinrichtung oder Venturidüse vorzusehen. Mit anderen Worten soll eine mögliche Reaktion des mit verdampftem Brennstoff aufbereiteten Brennerabgases mit dem Prozessabgas gequencht werden.

In Weiterbildung der Erfindung mündet in die Abgasleitung eine Prozessabgas führende Gasleitvorrichtung ein. Dadurch wird dem Brennerabgas und dem verdampfenden Brennstoff Prozessabgas zugeführt. Dadurch wird das Brennerabgas (bei einer Zuführung in Strömungsrichtung Eindüsvorrichtung) kontrolliert abgekühlt, und zwar in der Form, dass noch genügend Leistung zum Verdampfen des eingedüsten Brennstoffs bereitgestellt wird, aber dessen Entzündung verhindert wird. Die Zuführung kann aber auch im Bereich der Eindüsvorrichtung oder in Strömungsrichtung dahinter erfolgen. Durch geeignete Wahl der beschriebenen Hilfsmittel können die chemischen Reaktionen des Brennstoffs mit dem Brennerabgas und/oder dem Prozessabgas je nach Bedarf gefördert oder verhindert werden. Insbesondere durch Beeinflussung der Temperatur im Bereich der Eindüsvorrichtung ist es möglich, durch Reaktionen des eingedüsten Brennstoffs mit dem Brennerabgas gezielt Stoffe zu erzeugen, die in dem nachfolgenden Dieseloxidationskatalysator gewünschte Reaktionen unterstützen.

Die zuvor beschriebenen konstruktiven Ausgestaltungen werden zur Umsetzung der nachfolgend beschriebenen weiteren Ausgestaltung des erfindungsgemäßen Betreibungsverfahrens sinnvoll eingesetzt.

Bei dem Verfahren zum Betreiben eines erfindungsgemäßen Abgasnachbehandlungssystems für eine Brennkraftmaschine werden die eingedüsten Kohlenwasserstoffe in der Vorrichtung zumindest teilweise verdampft sowie durch Crackreaktionen und/oder durch partielle Oxidation chemisch verändert, wobei ein Brenner (2) als Bestandteil der Vorrichtung eine thermische Grundleistung zur Verfügung stellt, deren Untergrenze durch die Bereitstellung einer ausreichenden Energiemenge zur Verdampfung einer über eine Eindüsvorrichtung (5) in eine Abgasleitung (4) des Brenners (2) eingebrachten Kohlenwasserstoffmenge vorgegeben ist.

Bevorzugt ist eine katalytisch wirkende Beschichtung zumindest in einem Teilbereich der oxidierend wirkenden Behandlungsvorrichtung angeordnet, wobei der Platinanteil zumindest in einem Teilbereich der katalytischen Beschichtung der Bauteile weniger als 50 % der Gesamtmasse aller katalytisch wirksamen Substanzen in diesem Teilbereich der Beschichtung beträgt. Weiter bevorzugt erbringt der Brenner (2) eine zusätzlich das Prozessabgas auf eine vorgegebene Temperatur aufheizende thermische Leistung.

So kann der Brenner in einem Lambda-Bereich von 0,75 bis 1,75, bevorzugt von 0,9 bis 1,1, betrieben werden. Weiterhin ist der Brenner so ausgelegt, dass er in einem Leistungsbereich einsetzbar ist, der etwa 1-25%, vorzugsweise 2 - 20% und besonders bevorzugt 2,5 - 15% der Nennmotorleistung entspricht. Es ist ein Ziel der Erfindung, den Brenner mit einer möglichst geringen Leistung zu betreiben, weil dann insbesondere die erforderliche Luftfördereinrichtung für die Zufuhr von (Verbrennungs-) Luft relativ einfach ausgestaltet sein kann.

Weiterhin wird durch das erfindungsgemäße Verfahren in einer allgemeinen Form der eingedüste Brennstoff (gegebenenfalls unter direkter Hinzufügung einer Teilmenge von Prozessabgas) durch das Brennerabgas verdampft und zusammen mit dem Brennerabgas und der Gesamtmenge des Prozessabgases in die Abgasnachbehandlungseinrichtung geleitet, um die dort vorgesehenen Reaktionen hervorzurufen. Dabei wird der eingedüste Brennstoff zusammen mit dem Brennerabgas und dem Prozessabgas über das Abgasrohr dem Katalysator, insbesondere einem Dieseloxidationskatalysator und einem nachfolgenden Partikelfilter zugeführt und in dem Katalysator (Dieseloxidationskatalysator) und/oder in dem gegebenenfalls zusätzlich noch katalytisch beschichteten Partikelfilter oxidiert. Ein besonderer Vorteil dieser Ausgestaltung ist es, dass die Oxidationsreaktion also erst in dem Katalysator (Dieseloxidationskatalysator) erfolgt und demzufolge erst hier die zur Regeneration des Partikelfilters notwendigen Temperaturen erzeugt werden. Würde der eingespritzte Brennstoff bereits am Ort der Einbringung in die Abgasleitung entzündet, wäre dies mit einer höheren thermischen Belastung des gesamten Abgassystems verbunden und es müssten beträchtliche Wärmeverluste durch größere Kraftstoffmengen ausgeglichen werden.

Der entscheidende Vorteil des vorgeschlagenen Systems ist es, dass die durch Verdampfung und/oder chemische Modifikation veränderten Kohlenwasserstoffe im Katalysator (Dieseloxidationskatalysator) beziehungsweise in dem beschichteten Partikelfilter oder deren Kombination chemische Reaktionen eingehen, die sich von denen herkömmlicher Systeme zumindest teilweise unterscheiden. Das ist der Grund für den erfindungsgemäß möglichen Ersatz von Platin durch Palladium.

In dem Katalysator (Dieseloxidationskatalysator) beziehungsweise in dem beschichteten Partikelfilter oder deren Kombination wird durch die Oxidation des eingedüsten Brennstoffs beispielsweise eine Temperatur von bis zu 650°C erzeugt, die zur Regeneration von Partikelfiltern benötigt wird. In weiterer Ausgestaltung des Verfahrens wird eine Teilmenge der eingedüsten Brennstoffmenge unter Freisetzung von Wärme innerhalb der Abgasleitung und/oder dem Ort der Zusammenführung mit dem Prozessabgas oxidiert. Dadurch kann die thermische Gesamtleistung bei minimal eingestellter Brennerleistung so weit erhöht werden, dass eine sichere Inbetriebsetzung des Katalysators (Dieseloxidationskatalysators) beziehungsweise des beschichteten Partikelfilters oder deren Kombination erfolgt. Um seine Aktivität zu starten, also um eine katalytische Reaktion des eingebrachten verdampften Brennstoffs zu starten, muss der Katalysator (Dieseloxidationskatalysator) beziehungsweise der beschichtete Partikelfilter oder deren Kombination eine vorgegebene Mindesttemperatur, beispielsweise 300 °C, erreichen. Diese Temperatur wird durch die Summation der Brennerleistung und der Leistung, die durch die verbrannte Teilmenge erzeugt wird, erreicht.

In weiterer Ausgestaltung wird die oxidierte Teilmenge der eingedüsten Brennstoffmenge unabhängig von der gesamten eingedüsten Brennstoffmenge zumindest angenähert konstant gehalten. Dabei ist es weiterhin vorgesehen, nach Überschreitung einer Grenzmenge der teilumgesetzten Brennstoffmenge die Teilumsetzung zu beenden und den Brennstoff insgesamt zu verdampfen. Diese unterschiedlichen Wirkungen werden durch eine strikte Kontrolle des Verbrennungsluftverhältnisses in dem Brenner und/oder eine strikte Kontrolle der Menge der im Fall der Verwendung einer Luftstromzerstäuberdüse zugeführten Zerstäubungsluft für die Luftstromzerstäuberdüse erreicht. Weitere Einflussgrößen sind der Ort der Anbringung der Mündung der Eindüsvorrichtung und die Zufuhr einer Teilmenge von Prozessabgas (zur Kühlung des Brennerabgases und folglich der Verdampfflüssigkeit), ebenfalls unter Berücksichtigung des Zufuhrortes.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind. Es zeigen:
Fig.1 in schematischer Darstellung eine Gesamtdarstellung des Abgasnachbehandlungssystems für eine Brennkraftmaschine,
Fig. 2 eine erste Ausführung der mit einem Abgasrohr zusammenwirkenden Verdampfereinrichtung,
Fig. 3 eine zweite Ausführung der mit einem Abgasrohr zusammenwirkenden Verdampfereinrichtung und
Fig. 4 eine dritte Ausführung der mit einem Abgasrohr zusammenwirkenden Verdampfereinrichtung.

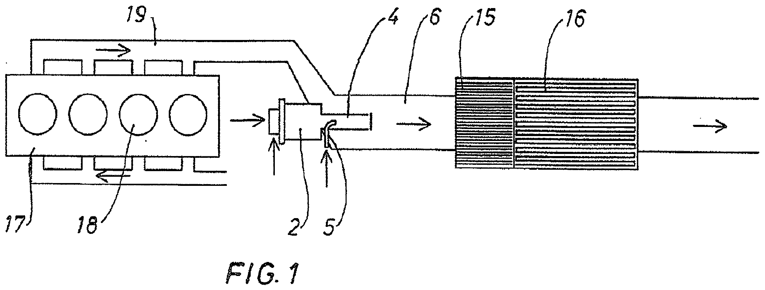

Das in Figur 1 dargestellte System weist eine Brennkraftmaschine 17 auf, die insbesondere eine Diesel-Brennkraftmaschine ist. Der Brennkraftmaschine 17 wird Dieselkraftstoff und Luft zugeführt, die in den dargestellten vier Zylindern 18 verbrannt werden und über die vor die in den Zylindern beweglichen Kolben und Pleuel die Kurbelwelle in Drehbewegung setzen. Die in den Zylindern 18 verbrannten Abgase werden über ein Sammelrohr 19 in ein Abgasrohr 6 geleitet. In das Abgasrohr 6 ragt eine Abgasleitung 4 eines Brenners 2 hinein, wobei in die Abgasleitung 4 eine Eindüsvorrichtung 5 hineinragt. Dem Brenner 2 wird - wie nachfolgend noch insgesamt erläutert wird - Brennstoff und Luft zugeführt, während über die Eindüsvorrichtung 5 flüssiger Brennstoff in die Abgasleitung 4 eingedüst wird. Das System, bestehend aus dem Brenner 2, der Eindüsvorrichtung 5 und der Abgasleitung 4, wird nachfolgend Verdampfereinrichtung genannt. In das Abgasrohr 6 sind stromabwärts der Einmündung der Abgasleitung 4 ein Dieseloxidationskatalysator 15 und ein Partikelfilter 16 eingebaut. Die in dem Partikelfilter 16 insbesondere aus dem Prozessabgas der Brennkraftmaschine 17 ausgefilterten Rußpartikel werden mit Hilfe der in dem Abgasnachbehandlungssystem erzeugten Wärme verbrannt.

Die Verdampfereinrichtung gemäß Figur 2 bis 4 weist bei allen Ausführungen ein Gehäuse 1 auf, in das der Brenner 2, eine Brennkammer 3, die Abgasleitung 4 und die Eindüsvorrichtung 5 für einen flüssigen Brennstoff integriert sind. Dabei ist das Gehäuse 1 ebenfalls bei allen Ausführungen so mit dem Abgasrohr 6 verbunden, dass die Abgasleitung 4 mit einem Austritt 7 konzentrisch in das Abgasrohr 6 eingeführt ist und der Austritt 7 in Strömungsrichtung des durch das Abgasrohr 6 strömenden Prozessabgases angeordnet ist.

Der Brenner 2 weist eine Versorgungsvorrichtung 8a für einen gasförmigen oder flüssigen Brennstoff sowie eine Versorgungsvorrichtung 8b für Luft auf. Der Brennstoff und die Luft werden in geeigneter Weise miteinander gemischt und beispielsweise über eine Luftstromzerstäuberdüse 9 in die Brennkammer 3 eingebracht und das Gemisch wird in der Brennkammer 3 verbrannt. Dazu wird das Gemisch in dem Brenner 2 und/oder der Brennkammer 3 in geeigneter Weise entzündet. Um die Wärmeverluste gering zu halten, ist die Brennkammer 3 möglichst weitgehend isoliert in das Gehäuse 1 eingesetzt. Die Brennkammer 3 weist eine Austrittsöffnung 10 auf, durch die das Brennerabgas in die Abgasleitung 4 eintritt und entlang der Abgasleitung 4 bis zu dem Austritt 7 strömt, um sich dort mit dem in dem Abgasrohr 6 strömenden Prozessabgas, das Brennkraftmaschinenabgas ist, zu vermischen. Das Gemisch aus Brennstoff und Luft ist so eingestellt, dass im Bereich der Austrittsöffnung 10 aus der Brennkammer 3 die Oxidationsreaktionen weitgehend abgeschlossen sind und demzufolge ein erhitzter Abgasstrom in die Abgasleitung 4 einströmt. In die Abgasleitung 4 mündet die Eindüsvorrichtung 5 mit einer Mündung 11 vorzugsweise konzentrisch zu der Abgasleitung 4 ein. Am Ort der Mündung 11 ist eine Zerstäuberdüse angeordnet, mit der der über die Eindüsvorrichtung 5 zugeführte flüssige Brennstoff fein zerstäubt wird. Der so eingebrachte Brennstoff wird folglich erhitzt und verdampft. Im Bereich der Mündung 11 ist eine Venturieinrichtung 12a in die Abgasleitung 4 eingesetzt. Die Venturieinrichtung 12a bewirkt eine zusätzliche Vermischung der Verdampfflüssigkeit mit dem Abgas. Im Bereich des Austritts 7 ist eine Quencheinrichtung 13 angeordnet, die in dem Ausführungsbeispiel als Prallplatte ausgebildet ist und eine Durchmischung des aus dem Austritt 7 ausströmenden, mit der verdampften Verdampfflüssigkeit vermischten Abgases mit dem Prozessabgas bewirkt. Gleichzeitig kann die Quencheinrichtung 13 zur Vermeidung einer Entzündung des hier entstehenden Gesamtgemisches eingesetzt werden. Zu einer Strömungsgeschwindigkeitserhöhung des Prozessgasstroms ist im Bereich des Austritts 7 beziehungsweise der Quencheinrichtung 13 eine Venturieinrichtung 12b in das Abgasrohr 6 eingebaut.

Das auf die beschriebene Weise gebildete Gesamtgemisch wird dann einer Abgasnachbehandlungseinrichtung zugeführt, die einen Stickstoffoxide selektiv katalytisch reduzierenden Katalysator und/oder NO-Speicherkatalysator und/oder einen Dieseloxidationskatalysator 15 und einen Partikelfilter 16 aufweist.

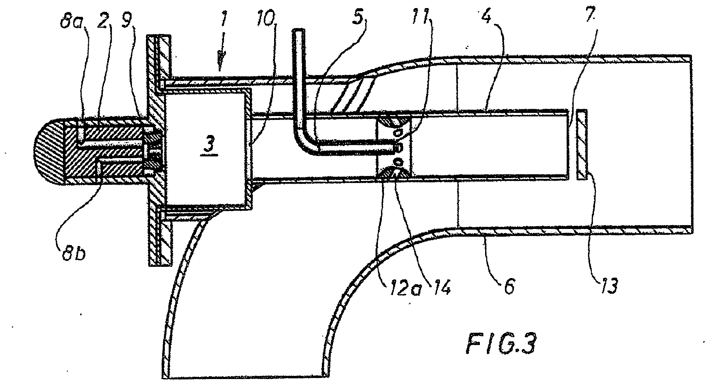

Die Ausführung gemäß Fig. 3 unterscheidet sich von der Ausführung gemäß Fig. 1 dadurch, dass hier zusätzlich im Bereich der Venturieinrichtung 12a eine Gasleitvorrichtung 14 in Form von auf den Umfang der Abgasleitung 4 angeordneten und etwa im Zentrum der Venturieinrichtung 12a mündenden Bohrungen angeordnet ist. Durch diese Gasleitvorrichtung 14 wird in die Abgasleitung 4 eine Teilmenge Prozessabgas eingeführt. Im Übrigen ist bei dieser Ausführung im Bereich der Mündung 11 keine Venturieinrichtung 12b eingebaut.

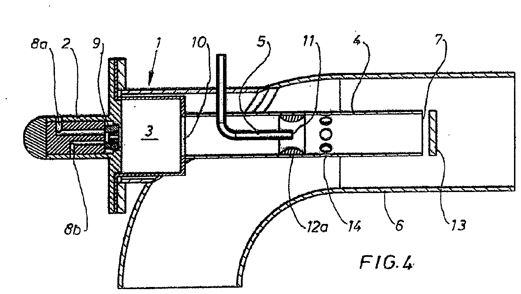

Die Ausführung gemäß Fig. 4 unterscheidet sich von der Ausführung gemäß Fig. 2 dadurch, dass die Gasleitvorrichtung 14 hier im Bereich stromabwärts der Venturieinrichtung 1 2a in die Abgasleitung 4 eingearbeitet ist.

### Bezugszeichen

- 1: Gehäuse
- 2: Brenner
- 3: Brennkammer
- 4: Abgasleitung
- 5: Eindüsvorrichtung
- 6: Abgasrohr
- 7: Austritt
- 8a, 8b: Versorgungsvorrichtung
- 9: Luftstromzerstäuberdüse
- 10: Austrittsöffnung
- 11: Mündung
- 12a, 12b: Venturieinrichtung
- 13: Quencheinrichtung
- 14: Gasleitvorrichtung
- 15: Dieseloxidationskatalysator
- 16: Partikelfilter
- 17: Brennkraftmaschine
- 18: Zylinder
- 19: Sammelrohr

### BEISPIELE:

### Katalysator A (erfindungsgemäß):

Dieseloxidationskatalysator (DOC) mit 2,12 g/L (60 g/ft³) Pd auf Cordierit Substrat mit den Abmessungen D9.5"xL4.5", der Zelldichte 300 cpsi und der Wandstärke 5 mil. Der Katalysator wurde hergestellt durch Imprägnierung eines Aluminiumoxids (BET-Oberfläche 160 m²/g) mit Palladiumnitratlösung und Aufbringung des imprägnierten Oxids mit einer Beladung von 130 g/L auf das Substrat und anschließender Trocknung und Temperung. Der Katalysator wurde dann 16h bei 700°C im Ofen unter Luft gealtert.

### Katalysator B (erfindungsgemäß):

Katalytisch beschichteter Filter (CDPF) mit insgesamt 0,82 g/L (25 g/ft³) Pd auf einem Cordierit-Oberflächenfiltersubstrat mit den Abmessungen D9.5"xL12", der Zelldichte 200 cpsi und der Wandstärke 12 mil. Der Palladiumgehalt im Bereich 5 Zoll ausgehend vom Eintritt beträgt 1,63 g/L (46 g/ft³), im restlichen Bereich 0,35 g/L (10 g/ft³).

### Katalysator C (erfindungsgemäß):

DOC mit 1,41 g/L (40 g/ft³) Masseanteil Pt:Pd von 1:4 auf Cordierit Substrat mit den Abmessungen D9.5"xL4.5", der Zelldichte 300 cpsi und der Wandstärke 5 mil. Der Katalysator wurde hergestellt durch Imprägnierung eines Alumosilikats (BET-Oberfläche 150 m²/g, 5% SiO₂) mit Palladium- und Platinnitratlösung und Aufbringung des imprägnierten Oxids mit einer Beladung von 130 g/L auf das Substrat und anschließender Trocknung und Temperung. Der Katalysator wurde dann 16h bei 700°C im Ofen unter Luft gealtert.

### Katalysator D (erfindungsgemäß):

DOC mit 1,06 g/L (30 g/ft³) Masseanteil Pt:Pd von 1:2 auf Cordierit Substrat mit den Abmessungen D9.5"xL4.5", der Zelldichte 300 cpsi und der Wandstärke 5 mil. Der Katalysator wurde hergestellt durch Imprägnierung eines Alumosilikats (BET-Oberfläche 150 m²/g, 5% SiO₂) mit Palladium- und Platinnitratlösung und Aufbringung des imprägnierten Oxids mit einer Beladung von 130 g/L auf das Substrat und anschließender Trocknung und Temperung. Der Katalysator wurde dann 16h bei 700°C im Ofen unter Luft gealtert.

### Katalysator E (nicht erfindungsgemäß):

DOC mit 1,06 g/L (30 g/ft³) Masseanteil Pt:Pd von 2:1 auf Cordierit Substrat mit den Abmessungen D9.5"xL4.5", der Zelldichte 300 cpsi und der Wandstärke 5 mil. Der Katalysator wurde hergestellt durch Imprägnierung eines Alumosilikats (BET-Oberfläche 150 m²/g, 5% SiO₂) mit Palladium- und Platinnitratlösung und Aufbringung des imprägnierten Oxids mit einer Beladung von 130 g/L auf das Substrat und anschließender Trocknung und Temperung. Der Katalysator wurde dann 16h bei 700°C im Ofen unter Luft gealtert.

### Systemaufbau:

Motor: TCD 2012 L06-4 mit Tier III-Abstimmung von Deutz
Brenner: 10 kW Heizleistung (Dieselkraftstoffversorgung) mit sekundärer Diesel-Eindosierung in die Brennerflamme
Die Katalysatoren sind jeweils mit 10 Thermoelementen T5.1i bis T5.10i bzw. T5.1o bis T5.10o in 1 Zoll Tiefe von der Eintritts- und Austrittsseite des Katalysators bestückt.

### Versuchsdurchführung:

Nach 30minütiger Konditionierung des Katalysatorsystems bei Volllast wird der gewünschte Motorbetriebspunkt (EOP) eingestellt und der Brenner mit 10 kW Leistung zugeschaltet. Es ergibt sich der Abgasmassenstrom MFR. Nachdem sich die Temperatur am DOC-Eintritt auf den Zielwert T5.0 eingependelt hat, wird Sekundärdieselkraftstoff in die Flamme des Brenners eingedüst in einer Menge um unter adiabaten Bedingungen bei vollständiger Verbrennung eine Zieltemperatur von 650°C zu erreichen. Die Eindosierung wird über 8 Minuten konstant aufrechterhalten und dann wieder abgestellt. Die Temperaturen vor, nach und im Katalysator sowie die HC-Menge nach Katalysator HC_out werden aufgezeichnet. Anschließend wird ein neuer Motorbetriebspunkt bei eingeschaltetem Brenner angefahren. Nach Stabilisierung der DOC-Eintrittstemperatur wird erneut eine entsprechende Dieselkraftstoffmenge in die Brennerflamme eindosiert und es erfolgt die Vermessung. Dies wird für jeden weiteren Betriebspunkt wiederholt.

Ergebnisse (A,B,C,D,E) kennzeichnen die Ergebnisse für die unterschiedlichen Katalysatoren)

| EOP | | MFR | T5.0 | HC_out | | | | | Ø T5.xi | | | | | σ T5.xi | | | | |
|---|---|---|---|---|---|---|---|---|---|---|---|---|---|---|---|---|---|---|
| min⁻¹ | Nm | Kg/h | °C | [ppm C3] | | | | | [°C] | | | | | [°C] | | | | |
| | | | | A | B | C | D | E | A | B | C | D | E | A | B | C | D | E |
| 1910 | 200 | 420 | 300 | 218 | 127 | 247 | 314 | 3588* | 537 | 420 | 531 | 513 | 292* | 8,2 | 34 | 11,7 | 17,0 | 4,5* |
| 1635 | 295 | 425 | 320 | 207 | 96 | 221 | 260 | 598 | 570 | 492 | 586 | 573 | 466 | 8,5 | 17 | 9,8 | 11,7 | 73,4 |
| 1550 | 345 | 430 | 340 | 194 | 103 | 214 | 247 | 495 | 577 | 509 | 590 | 587 | 560 | 7,9 | 15 | 9,3 | 10,4 | 20,1 |
| 1470 | 390 | 430 | 360 | 179 | 107 | 195 | 226 | 432 | 590 | 525 | 596 | 592 | 587 | 7,6 | 14 | 9,0 | 10,0 | 5,5 |

| | | | | | | | | | | | | | | | | | | |
|---|---|---|---|---|---|---|---|---|---|---|---|---|---|---|---|---|---|---|
| *) Vollständiger Einbruch der Katalysatoraktivität | | | | | | | | | | | | | | | | | | |

| Katalysator | Relative Kosten |
|---|---|
| A | 100% |
| C | 107% |
| D | 100% |
| E | 150% |

Die relativen Kosten wurden auf Basis des über 5 Jahre gemittelten Preisverhältnisses von Platin zu Palladium von ca. 4 ermittelt. Katalysator B ist nicht vergleichbar, da hier die Filterfunktion mit integriert ist.

Es ist zu erkennen, dass mit abnehmenden Platinanteil der Schlupf an Kohlenwasserstoffen (HC out) abnimmt und der Mittelwert der Temperaturen im Eintrittsbereich des Katalysators (Ø T5.xi) zunimmt. Dazu wurden die Messwerte der einzelnen Thermoelemente über die letzten 20 s des Regenerationszyklus gemittelt und daraus wiederum der Gesamtmittelwert gebildet. Die Standardabweichung dieser Temperaturmessstellen innerhalb der letzten 20 s des Regenerationszyklus (σ T5.xi) ist bei platinarmen Katalysatoren geringer, was auf eine einheitlichere Verbrennung hinweist. Diese Beobachtungen gelten im besonderen Maße für die niedrigen Eintrittstemperaturen T5.0.

Allein die erfindungsgemäßen Katalysatoren zeigen befriedigende Leistung bei äquivalenten bzw. geringeren Kosten gegenüber den nichterfindungsgemäßen Varianten.

Katalysator B übernimmt aufgrund der integrierten Filterfunktion und der deutlich abgesenkten Beladung eine gesonderte Stellung ein. Die geringere Beladung sowie die höhere thermische Masse und geringere Oberfläche des Filtersubstrats führen dazu, dass innerhalb des überwachten Eintrittsbereiches die Verbrennung schlechter anspringt und inhomogener verläuft. Somit ist die erreichte Durchschnittstemperatur Ø T5.xi im Eingang im Vergleich deutlich abgesenkt und die Standardabweichung höher. Die Zieltemperatur von 600 bzw. 650°C wird jedoch bereits im vorderen Teil des Filters erreicht wird.

Weitere Versuche bei zusätzlicher intensiverer Alterung (16h bei 800°C in 80%N₂/10%O₂/10%H₂O) zeigen, dass diese Differenzierung noch stärker zutage tritt.

## Patentansprüche

1. Abgasnachbehandlungssystem für eine Brennkraftmaschine, beinhaltend:
a. eine Vorrichtung zur Einbringung von Kohlenwasserstoffen in ein das Prozessabgas der Brennkraftmaschine führendes Abgasrohr (6), wobei die Kohlenwasserstoffe in der Vorrichtung zumindest teilweise verdampft sowie durch Crackreaktionen und/oder durch partielle Oxidation chemisch verändert werden und wobei die Vorrichtung zur zumindest teilweisen Verdampfung sowie zur durch Crackreaktionen und/oder durch partielle Oxidation bewirkten chemischen Veränderung der Kohlenwasserstoffe eine Anordnung ist, die einen Brenner (2) mit einer Versorgungsvorrichtung (8a, 8b) für Brennstoff und Luft, sowie eine Brennkammer (3) und eine mit einer Eindüsvorrichtung (5) für Kohlenwasserstoffe versehene Abgasleitung (4) aufweist, die an dem Einbringungsort in das Abgasrohr (6) einmündet, und
b. eine stromabwärts des Austritts (7), vom Prozessabgas durchströmte und durch Oxidation der eingebrachten, teilweise verdampften sowie durch Crackreaktionen und/oder durch partielle Oxidation chemisch veränderten Kohlenwasserstoffe die Prozessabgastemperatur erhöhende, katalytisch beschichtete Bauteile aufweisende Behandlungsvorrichtung,
**dadurch gekennzeichnet, dass**
der Platinanteil zumindest in einem Teilbereich der katalytischen Beschichtung der Bauteile weniger als 50 % der Gesamtmasse aller katalytisch wirksamen Substanzen in diesem Teilbereich der Beschichtung beträgt, der Palladiumanteil der katalytischen Beschichtung des Teilbereichs mindestens 50 % der Gesamtmasse aller Edelmetalle des Teilbereichs der Behandlungsvorrichtung beträgt und wobei die katalytisch beschichteten Bauteile Katalysatorsubstrate oder Partikelfilter sind.

2. Abgasnachbehandlungssystem nach Anspruch 1,
**dadurch gekennzeichnet, dass**
der Teilbereich der katalytischen Beschichtung der Bauteile der Behandlungsvorrichtung mindestens 20% der Gesamtmasse der katalytischen Beschichtung auf den Bauteilen der die Prozessabgastemperatur erhöhenden Behandlungsvorrichtung umfasst.

3. Abgasnachbehandlungssystem nach Anspruch 1 oder 2,
**dadurch gekennzeichnet, dass**
die katalytische Beschichtung des Teilbereichs Edelmetalle mit einer Gesamtedelmetallmasse bezogen auf das Bauteil- bzw. Substratvolumen im Bereich von 0,1-10 g/L enthält.

4. Abgasnachbehandlungssystem nach Anspruch 3, **dadurch gekennzeichnet, dass** der Anteil der Edelmetalle an der Gesamtmasse aller katalytisch wirksamen Substanzen des Teilbereichs der Behandlungsvorrichtung mehr als 10% beträgt.

5. Abgasnachbehandlungssystem nach Anspruch 3 und/oder 4,
**dadurch gekennzeichnet, dass**
der Platingehalt der katalytischen Beschichtung des Teilbereichs weniger als 1% der Gesamtmasse aller katalytisch wirksamen Substanzen des Teilbereichs der Behandlungsvorrichtung beträgt.

6. Abgasnachbehandlungssystem nach einem der vorherigen Ansprüche,
**dadurch gekennzeichnet, dass**
der Teilbereich ein ganzes die Prozessabgastemperatur erhöhendes katalytisch beschichtetes Bauteil oder einen Teil eines solchen Bauteils oder Teile mehrerer solcher Bauteile umfasst.

7. Abgasnachbehandlungssystem nach einem oder mehreren der Ansprüche 1 bis 6,
**dadurch gekennzeichnet, dass**
der Teilbereich den in Strömungsrichtung vorderen Teil einer zonalen Beschichtung eines solchen Bauteils darstellt.

8. Abgasnachbehandlungssystem nach einem oder mehreren der vorhergehenden Ansprüche,
**dadurch gekennzeichnet, dass**
insbesondere die Mündung (11) der Eindüsvorrichtung (5) in der Abgasleitung (4) eine Zerstäuberdüse, insbesondere eine Druckzerstäuberdüse oder eine Luftstromzerstäuberdüse, aufweist.

9. Abgasnachbehandlungssystem nach einem oder mehreren der vorhergehenden Ansprüche,
**dadurch gekennzeichnet, dass**
in der Abgasleitung (4) im Bereich der Mündung (11) der Eindüsvorrichtung (5) eine Venturieinrichtung (12a, 12b) angeordnet ist.

10. Abgasnachbehandlungssystem nach einem oder mehreren der vorhergehenden Ansprüche,
**dadurch gekennzeichnet, dass**
der Brenner (2), die Abgasleitung (4) und die Eindüsvorrichtung (5) in ein Gehäuse (1) integriert sind und das Gehäuse (1) an das Abgasrohr (6) adaptiert ist.

11. Abgasnachbehandlungssystem nach einem oder mehreren der vorhergehenden Ansprüche,
**dadurch gekennzeichnet, dass**
die Abgasleitung (4) mit einem Austritt (7) in das Abgasrohr (6) hineinragt.

12. Abgasnachbehandlungssystem nach Anspruch 11,
**dadurch gekennzeichnet, dass**
die Abgasleitung (4) konzentrisch in das Abgasrohr (6) so eingeführt ist, dass der Austritt (7) aus der Abgasleitung (4) in Strömungsrichtung des Prozessabgasstroms angeordnet ist.

13. Abgasnachbehandlungssystem nach einem oder mehreren der vorhergehenden Ansprüche,
**dadurch gekennzeichnet, dass**
im Bereich des Austritts (7) eine Quencheinrichtung (13) und/oder eine Venturieinrichtung vorhanden ist.

14. Abgasnachbehandlungssystem nach einem oder mehreren der vorhergehenden Ansprüche,
**dadurch gekennzeichnet, dass**
in die Abgasleitung (4) eine Prozessabgas führende Gasleitvorrichtung (14) vorzugsweise stromaufwärts der Mündung (11) der Einbringvorrichtung einmündet.

15. Verfahren zum Betreiben eines Abgasnachbehandlungssystems für eine Brennkraftmaschine gemäß einem oder mehreren der Ansprüche 1 bis 14,
**dadurch gekennzeichnet, dass**
die Kohlenwasserstoffe in der Vorrichtung zumindest teilweise verdampft sowie durch Crackreaktionen und/oder durch partielle Oxidation chemisch verändert werden und dass ein Brenner (2) als Bestandteil der Vorrichtung eine thermische Grundleistung zur Verfügung stellt, deren Untergrenze durch die Bereitstellung einer ausreichenden Energiemenge zur Verdampfung einer über eine Eindüsvorrichtung (5) in eine Abgasleitung (4) des Brenners (2) eingebrachten Kohlenwasserstoffmenge vorgegeben ist.

16. Verfahren nach Anspruch 15,
**dadurch gekennzeichnet, dass**
eine katalytisch wirkende Beschichtung zumindest in einem Teilbereich der oxidierend wirkenden Behandlungsvorrichtung angeordnet ist und dass der Platinanteil zumindest in einem Teilbereich der katalytischen Beschichtung der Bauteile weniger als 50% der Gesamtmasse aller katalytisch wirksamen Substanzen in diesem Teilbereich der Beschichtung beträgt.

17. Verfahren nach Anspruch 15 und/oder 16,
**dadurch gekennzeichnet, dass**
der Brenner (2) eine zusätzlich das Prozessabgas auf eine vorgegebene Temperatur aufheizende thermische Leistung erbringt.

## Claims

1. Exhaust aftertreatment system for an internal combustion engine, including:
a. a device for introducing hydrocarbons into an exhaust gas pipe (6) carrying the process exhaust gas of the internal combustion engine, wherein the hydrocarbons in the device are at least partially vaporized and chemically modified by cracking reactions and/or by partial oxidation and wherein the device for at least partial vaporization and for chemical modification of the hydrocarbons caused by cracking reactions and/or by partial oxidation is an arrangement which has a burner (2) with a supply device (8a, 8b) for fuel and air, and a combustion chamber (3) and an exhaust gas line (4) that is provided with an injection device (5) for hydrocarbons and that opens into the exhaust gas pipe (6) at the point of introduction, and
b. downstream of the outlet (7), a treatment device which has catalytically coated components and through which the process exhaust gas flows and which increases the process exhaust gas temperature by oxidation of the introduced, partially vaporized hydrocarbons chemically modified by cracking reactions and/or by partial oxidation,
**characterized in that**
the platinum content at least in a partial region of the catalytic coating of the components is less than 50% of the total mass of all catalytically active substances in this partial region of the coating, the palladium content of the catalytic coating of the partial region is at least 50% of the total mass of all noble metals of the partial region of the treatment device, and wherein the catalytically coated components are catalyst substrates or particle filters.

2. Exhaust aftertreatment system according to claim 1,
**characterized in that**
the partial region of the catalytic coating of the components of the treatment device comprises at least 20% of the total mass of the catalytic coating on the components of the treatment device that increases the process exhaust gas temperature.

3. Exhaust aftertreatment system according to claim 1 or 2,
**characterized in that**
the catalytic coating of the partial region contains noble metals with a total noble metal mass relative to the component or substrate volume in the range of 0.1 - 10 g/L.

4. Exhaust aftertreatment system according to claim 3, **characterized in that** the content of noble metals in the total mass of all catalytically active substances in the partial region of the treatment device is more than 10%.

5. Exhaust aftertreatment system according to claim 3 and/or 4,
**characterized in that**
the platinum content of the catalytic coating of the partial region is less than 1 % of the total mass of all catalytically active substances of the partial region of the treatment device.

6. Exhaust aftertreatment system according to one of the previous claims,
**characterized in that**
the partial region comprises an entire catalytically coated component that increases the process exhaust gas temperature or a part of such a component or parts of several such components.

7. Exhaust aftertreatment system according to one or more of claims 1 to 6,
**characterized in that**
the partial region represents the front part, in the direction of flow, of a zonal coating of such a component.

8. Exhaust aftertreatment system according to one or more of the preceding claims,
**characterized in that**
in particular the mouth (11) of the injection device (5) in the exhaust gas line (4) has an atomizer nozzle, in particular a pressure atomizer nozzle or an airflow atomizer nozzle.

9. Exhaust aftertreatment system according to one or more of the preceding claims,
**characterized in that**
a Venturi device (12a, 12b) is arranged in the exhaust gas line (4) in the region of the mouth (11) of the injection device (5).

10. Exhaust aftertreatment system according to one or more of the preceding claims,
**characterized in that**
the burner (2), the exhaust gas line (4) and the injection device (5) are integrated into a housing (1) and the housing (1) is adapted to the exhaust gas pipe (6).

11. Exhaust aftertreatment system according to one or more of the preceding claims,
**characterized in that**
the exhaust gas line (4) projects with an outlet (7) into the exhaust gas pipe (6).

12. Exhaust aftertreatment system according to claim 11,
**characterized in that**
the exhaust gas line (4) is introduced concentrically into the exhaust gas pipe (6) such that the outlet (7) from the exhaust gas line (4) is arranged in the direction of flow of the process exhaust gas stream.

13. Exhaust aftertreatment system according to one or more of the preceding claims,
**characterized in that**
a quenching device (13) and/or a Venturi device is present in the region of the outlet (7).

14. Exhaust aftertreatment system according to one or more of the preceding claims,
**characterized in that**
a gas-guiding device (14) carrying process exhaust gas opens into the exhaust gas line (4) preferably upstream of the mouth (11) of the introduction device.

15. Method for operating an exhaust aftertreatment system for an internal combustion engine according to one or more of claims 1 to 14,
**characterized in that**
the hydrocarbons in the device are at least partially vaporized and chemically modified by cracking reactions and/or by partial oxidation, and that a burner (2) as a component of the device provides a basic thermal output, the lower limit of which is predetermined by the provision of a sufficient amount of energy for vaporizing a quantity of hydrocarbon introduced into an exhaust gas line (4) of the burner (2) via an injection device (5).

16. Method according to claim 15,
**characterized in that**
a catalytically active coating is arranged at least in a partial region of the oxidizing treatment device and that the platinum content at least in a partial region of the catalytic coating of the components is less than 50% of the total mass of all catalytically active substances in this partial region of the coating.

17. Method according to claim 15 and/or 16,
**characterized in that**
the burner (2) provides a thermal output additionally heating the process exhaust gas to a predetermined temperature.

## Revendications

1. Système de post-traitement des gaz d'échappement pour un moteur à combustion interne, comprenant :
a. un dispositif d'introduction d'hydrocarbures dans un tuyau d'échappement (6) guidant les gaz d'échappement de procédé du moteur à combustion interne, les hydrocarbures étant évaporés au moins partiellement et modifiés chimiquement par des réactions de craquage et/ou par oxydation partielle dans le dispositif et le dispositif pour l'évaporation au moins partielle ainsi que pour la modification chimique provoquée par des réactions de craquage et/ou par oxydation partielle des hydrocarbures étant un agencement comprenant un brûleur (2) pourvu d'un dispositif d'alimentation (8a, 8b) pour le carburant et l'air, ainsi qu'une chambre de combustion (3) et une conduite d'échappement (4) pourvue d'un dispositif d'injection (5) pour les hydrocarbures, qui débouche au point d'introduction dans le tuyau d'échappement (6), et
b. un dispositif de traitement présentant des composants catalytiquement revêtus, placé en aval de la sortie (7), traversé par les gaz d'échappement de procédé et augmentant la température des gaz d'échappement de procédé par oxydation des hydrocarbures introduits, partiellement évaporés et chimiquement modifiés par des réactions de craquage et/ou par oxydation partielle,
**caractérisé en ce que**
la proportion de platine représente, au moins dans une zone partielle du revêtement catalytique des composants, moins de 50 % de la masse totale de toutes les substances catalytiquement actives dans cette zone partielle du revêtement, la proportion de palladium du revêtement catalytique de la zone partielle représente au moins 50 % de la masse totale de tous les métaux nobles de la zone partielle du dispositif de traitement et les composants catalytiquement revêtus étant des substrats de catalyseur ou des filtres à particules.

2. Système de post-traitement des gaz d'échappement selon la revendication 1,
**caractérisé en ce que**
la zone partielle du revêtement catalytique des composants du dispositif de traitement représente au moins 20 % de la masse totale du revêtement catalytique sur les composants du dispositif de traitement augmentant la température des gaz d'échappement de procédé.

3. Système de post-traitement des gaz d'échappement selon la revendication 1 ou 2,
**caractérisé en ce que**
le revêtement catalytique de la zone partielle contient des métaux nobles en une masse totale de métaux nobles dans la plage de 0,1 à 10 g/l, sur la base du volume des composants ou du substrat.

4. Système de post-traitement des gaz d'échappement selon la revendication 3, **caractérisé en ce que** la proportion des métaux nobles dans la masse totale de toutes les substances catalytiquement actives de la zone partielle du dispositif de traitement est supérieure à 10%.

5. Système de post-traitement des gaz d'échappement selon la revendication 3 et/ou 4,
**caractérisé en ce que**
la teneur en platine du revêtement catalytique de la zone partielle est inférieure à 1 % de la masse totale de toutes les substances catalytiquement actives de la zone partielle du dispositif de traitement.

6. Système de post-traitement des gaz d'échappement selon l'une quelconque des revendications précédentes,
**caractérisé en ce que**
la zone partielle comprend un composant catalytiquement revêtu, complet, augmentant la température des gaz d'échappement de procédé ou une partie d'un tel composant ou des parties de plusieurs de ces composants.

7. Système de post-traitement des gaz d'échappement selon l'une ou plusieurs des revendications 1 à 6,
**caractérisé en ce que**
la zone partielle représente la partie avant dans le sens d'écoulement d'un revêtement de zone d'un tel composant.

8. Système de post-traitement des gaz d'échappement selon l'une ou plusieurs des revendications précédentes,
**caractérisé en ce que**
en particulier l'embouchure (11) du dispositif d'injection (5) dans la conduite d'échappement (4) présente une buse de pulvérisation, en particulier une buse de pulvérisation sous pression ou une buse de pulvérisation à flux d'air.

9. Système de post-traitement des gaz d'échappement selon l'une ou plusieurs des revendications précédentes,
**caractérisé en ce que**
un dispositif à venturi (12a, 12b) est disposé dans la conduite d'échappement (4) dans la zone de l'embouchure (11) du dispositif d'injection (5).

10. Système de post-traitement des gaz d'échappement selon l'une ou plusieurs des revendications précédentes,
**caractérisé en ce que**
le brûleur (2), la conduite d'échappement (4) et le dispositif d'injection (5) sont intégrés dans un boîtier (1) et ce boîtier (1) est adapté au tuyau d'échappement (6).

11. Système de post-traitement des gaz d'échappement selon l'une ou plusieurs des revendications précédentes,
**caractérisé en ce que**
la conduite d'échappement (4) pénètre avec une sortie (7) dans le tuyau d'échappement (6).

12. Système de post-traitement des gaz d'échappement selon la revendication 11,
**caractérisé en ce que**
la conduite d'échappement (4) est introduite de manière concentrique dans le tuyau d'échappement (6) de telle sorte que la sortie (7) de la conduite d'échappement (4) est agencée dans le sens d'écoulement du flux de gaz d'échappement de procédé.

13. Système de post-traitement des gaz d'échappement selon l'une ou plusieurs des revendications précédentes,
**caractérisé en ce que**
un dispositif de désactivation (13) et/ou un dispositif à venturi est/sont présent(s) dans la zone de la sortie (7).

14. Système de post-traitement des gaz d'échappement selon l'une ou plusieurs des revendications précédentes,
**caractérisé en ce que**
dans la conduite d'échappement (4), un dispositif de guidage de gaz (14) guidant des gaz d'échappement de procédé débouche de préférence en amont de l'embouchure (11) du dispositif d'introduction.

15. Procédé pour faire fonctionner un système de post-traitement des gaz d'échappement pour un moteur à combustion interne selon l'une ou plusieurs des revendications 1 à 14,
**caractérisé en ce que**
les hydrocarbures sont au moins partiellement évaporés et modifiés chimiquement par des réactions de craquage et/ou par oxydation partielle dans le dispositif et **en ce qu'**un brûleur (2), en tant qu'élément du dispositif, met à disposition une puissance thermique de base dont la limite inférieure est définie par la mise à disposition d'une quantité suffisante d'énergie pour l'évaporation d'une quantité d'hydrocarbures introduite par le biais d'un dispositif d'injection (5) dans une conduite d'échappement (4) du brûleur (2).

16. Procédé selon la revendication 15,
**caractérisé en ce que**
un revêtement catalytiquement actif est disposé au moins dans une zone partielle du dispositif de traitement à effet oxydant et **en ce que** la proportion de platine, au moins dans une zone partielle du revêtement catalytique des composants, est inférieure à 50 % de la masse totale de toutes les substances catalytiquement actives dans cette zone partielle du revêtement.

17. Procédé selon la revendication 15 et/ou 16,
**caractérisé en ce que**
le brûleur (2) fournit une puissance thermique chauffant en complément les gaz d'échappement de procédé à une température prédéterminée.
